# EUROPÄISCHE PATENTSCHRIFT

(11) **EP 2 607 275 B1**
(45) Veröffentlichungstag und Bekanntmachung des Hinweises auf die Patenterteilung: **31.01.2018**
(21) Anmeldenummer: 11194578.8
(22) Anmeldetag: 20.12.2011
(51) Int. Cl.: B65G 53/46, B65D 90/34, B65D 88/56, B65G 65/23

(54) **System zum gravitativen Entleeren eines Schüttgutbehälters**
System for emptying a bulk material container using gravity
Système de vidage gravitationnel d'un récipient de produits en vrac

(43) Veröffentlichungstag der Anmeldung: 26.06.2013
(73) Patentinhaber: Dirnhofer, Rainer, 92272 Freudenberg (DE)
(72) Erfinder: Dirnhofer, Rainer, 92272 Freudenberg (DE)
(74) Vertreter: Winter, Brandl, Fürniss, Hübner, Röss, Kaiser, Polte - Partnerschaft mbB

(56) Entgegenhaltungen:
- EP-A2- 1 661 824
- DE-A1- 19 901 967
- DE-A1-102007 032 017
- DE-C1- 19 526 938
- DE-C1- 19 801 747
- DE-U1-202009 015 902
- FR-A1- 2 177 788
- US-A- 3 193 058
- US-A- 4 875 811
- US-A- 5 096 336

## Beschreibung

Die Erfindung betrifft ein System und ein Verfahren zum gravitativen Entleeren eines Schüttgutbehälters mit Hilfe einer in Auslaufrichtung dem Schüttgutbehälter nachgeordneten Zellenradschleuse und einer der Zellenradschleuse nachgeordneten pneumatischen Druckförderanlage.

Ein derartiges System ist beispielsweise aus der EP 1661824 A2 oder DE 202009015902 U1 bekannt, welche die Grundlage für den Oberbegriff des Anspruchs 1 darstellen. In diesen Druckschriften wird im Besonderen ein System beschrieben, das für einen dosierten Auslauf staub- und rieselfähiger Schüttgüter aus einem Schüttgutbehälter eine Zellenradschleuse und eine pneumatisch arbeitende Druckförderanlage aufweist. Der Schüttgutbehälter ist in einem Seecontainer angeordnet. Zur Unterstützung des Schüttgutauslaufs wird eine an einem Auslauftrichter des Schüttgutbehälters vorgesehene Druckluftdüsenanordnung vorgeschlagen, die Druckluft in den Auslauftrichter des Schüttgutbehälters einbläst. Alternativ oder zusätzlich wird ein Schwingungserzeuger, z.B. Rüttler, vorgeschlagen, um in dem im Auslauftrichter befindlichen Schüttgut Schwingung zu erzeugen. Beide Vorrichtungen bezwecken eine Fluidisierung des im Auslauftrichter befindlichen Schüttguts.

Vergleichbare oder alternative Fluidisierungsvorrichtungen werden beispielsweise in der DE 2012071 A1, DE 2915279 A1, DE 202005016872 U1, DD 289505 A5, US 4,875811, DE 199 01 967 A1, DE 198 01 747 C1 oder DE 19605889 A1 vorgeschlagen.

Die bekannten Vorrichtungen sollen eine möglichst vollständige Entleerung eines Schüttgutbehälters gewährleisten.. Herkömmliche Systeme erfordern daher eine in konstruktiver und prozesstechnischer Hinsicht aufwändige Ausführung, um eine vollständige Entleerung eines Schüttgutbehälters in jedem Fall gewährleisten zu können.

Hiervon ausgehend liegt der Erfindung die Aufgabe zugrunde, ein für eine gravitative Entleerung eines Schüttgutbehälters ausgelegtes System sowie ein Verfahren bereitzustellen, das mit einem konstruktiv einfachen Aufbau eine im Wesentlichen vollständige Entleerung des Schüttgutbehälters auch ohne die oben diskutierten zusätzlichen Vorrichtungen ermöglicht.

Diese Aufgabe wird durch ein System mit den Merkmalen des Anspruchs 1 und ein Verfahren gemäß den Merkmalen des Anspruchs 6 gelöst. Vorteilhafte Weiterbildungen sind Gegenstand abhängiger Ansprüche.

Das erfindungsgemäße System ist für eine gravitative Entleerung eines Schüttgutbehälters ausgelegt. Die Entleerung des Schüttgutbehälters erfolgt daher grundsätzlich unter der Wirkung der Schwerkraft über einen am Schüttgutbehälter vorgesehenen Auslauftrichter. Das erfindungsgemäße System weist eine dem Auslauftrichter des Schüttgutbehälters in Schüttgutauslaufrichtung nachgeordnete Zellenradschleuse und eine der Zellenradschleuse nachgeordnete pneumatische Druckförderanlage (auch als Flugförderanlage bekannt) auf.

Der Schüttgutbehälter kann zum Zweck der Entleerung in z.B. aus der EP 1661824 A2 oder DE 202009015902 U1 bekannter Weise über ein als Kippgestell ausgeführtes, stationäres oder mobiles Traggestell aus einer im Wesentlichen horizontalen Ruhe- oder Transportlage in eine definierte Schräg- oder Vertikallage gebracht werden, in der sich im Schüttgutbehälter über dem Auslauftrichter eine Schüttgutsäule oder (allgemein:) ein Schüttgutvolumen bildet, aus dem das Schüttgut über den Auslauftrichter gravitativ ausläuft. Je nach den Fließeigenschaften des Schüttguts kann es nötig sein, den Schüttgutbehälter in mehreren Schritten, d.h. langsam, anzukippen, um eine allzu starke Komprimierung des Schüttguts zu verhindern, was den Schüttgutauslauf be- oder verhindern könnte. Bei bestimmten Schüttgütern, wie z.B. Zement, kann anstelle eines schrittweisen Ankippens der Schüttgutbehälter aus der im Wesentlichen horizontalen Transportlage in einem Schritt, d.h. rasch, in die definierte Schräg- oder Vertikallage gekippt werden. Der Vorgang des Ankippens des Schüttgutbehälters aus der im Wesentlichen horizontalen Transportlage in die definierte Schräg- oder Vertikallage entfällt natürlich, wenn der Schüttgutbehälter durch ein stationäres oder mobiles Traggestell von vornherein bereits so getragen wird, dass er sich in einer Schräg- oder Vertikallage befindet, in der ein gravitativer Schüttgutauslauf aus dem Schüttgutbehälter über den Auslauftrichter möglich ist. In jedem Fall ermöglicht die dem Schüttgutbehälter nachgeordnete Zellenradschleuse einen dosierten Auslauf des Schüttguts aus dem Schüttgutbehälter in eine Druckförderleitung der der Zellenradschleuse nachgeordneten pneumatischen Druckförderanlage.

Bei den hier zu entleerenden Schüttgütern handelt es sich um staub- und/oder rieselfähige Schüttgüter, wie sie in der EP 1661824 A2 oder DE 202009015902 U1 spezifiziert sind. Derartige Schüttgüter umfassen damit im Allgemeinen grobkörnige Granulate bis hin zu feinsten Stäuben mit einem Korndurchmesser im µm-Bereich und adhäsiven Eigenschaften und weisen unterschiedliche Fließfähigkeiten (von nicht fließend über sehr kohäsiv, kohäsiv, leicht fließend bis hin zu frei fließend) auf. Eine gute Fließfähigkeit hat ein Schüttgut, das leicht zum Fließen zu bringen ist, während ein Schüttgut, das zu Auslaufstörungen neigt (z.B. durch die Bildung von Schüttgutbrücken oder Schächten) oder sich während Lagerung und Transport verfestigt, eine schlechte Fließfähigkeit aufweist.

Das erfindungsgemäße System beruht nun auf der Erkenntnis, dass die bei Zellenradschleusen eigentlich unerwünschte Fremd- oder Falschluft für den Schüttgutauslauf aus dem Schüttgutbehälter förderlich sein kann. Bei der Herstellung und Entwicklung von Zellenradschleusen wurde bislang grundsätzlich darauf geachtet, den konstruktionsbedingt erforderlichen Spalt zwischen dem Zellenrad und dem Gehäuse der Zellenradschleuse, d.h. das Arbeits- oder Laufspiel zwischen dem Zellenradumfang und der Innenwand des Gehäuses der Zellenradschleuse (allgemein: das Laufspiel der Zellenradschleuse), zu minimieren, um die Bildung unerwünschter Luftblasen oder Luftpolster im Bereich vor der Zellenradschleuse zu verhindern, die den Schüttgutfluss zur Zellenradschleuse behindern können. Zellenradschleusen wurden daher bislang grundsätzlich möglichst dicht ausgeführt. Oftmals wurden an der Zellenradschleuse eine oder mehrere Entlüftungsbohrungen vorgesehen, um Fremd- oder Falschluft aus der Zellenradschleuse heraus abzuführen.

Es wurde nun erkannt, dass sich in Schüttgutauslaufrichtung vor der Zellenradschleuse befindliches Schüttgut unter bestimmten Bedingungen allein durch den Falschluftdurchsatz der Zellenradschleuse (ungeachtet der Baugröße) zum Fließen anregen, d.h. fluidisieren, lässt. Eine Fluidisierung des Schüttguts wird erfindungsgemäß im Besonderen dann erreicht, wenn das Laufspiel der Zellenradschleuse in Abhängigkeit von der (bekannten) Fließeigenschaft des auszutragenden Schüttguts für einen bestimmten Förderdruck der Druckförderanlage und eine bestimmte Zellenraddrehzahl so ausgelegt ist, dass im Betrieb des Systems ein definierter Falschluftdurchsatz erhalten wird, der bereits allein, d.h. ohne die eingangs diskutierten Vorrichtungen herkömmlicher Systeme, ausreicht, um das in Schüttgutauslaufrichtung vor der Zellenradschleuse befindliche Schüttgut zu fluidisieren. An die Stelle eines bestimmten Förderdrucks kann ein bestimmter Förderdruckbereich treten. Ebenso kann an die Stelle der bestimmten Zellenraddrehzahl ein bestimmter Drehzahlbereich treten.

Es wird davon ausgegangen, dass sich der Falschluftdurchsatz aus einem konstruktionsbedingten Anteil, der sich im Betrieb des Systems durch die Leckage von Luft aus dem Auslaufbereich der Zellenradschleuse (hohes Druckniveau) durch das Laufspiel der Zellenradschleuse in den Zulaufbereich der Zellenradschleuse (niedriges Druckniveau) ergibt, und einem betriebsbedingten Anteil, der in Abhängigkeit von der Drehzahl der Zellenradschleuse in den Zellen des Zellenrads vom Auslaufbereich der Zellenradschleuse (hohes Druckniveau) in den Zulaufbereich der Zellenradschleuse (niedriges Druckniveau) mitgenommen wird, zusammensetzt.

Das Laufspiel der Zellenradschleuse kann unveränderlich ausgebildet, fest eingestellt oder nachstellbar sein. Das Laufspiel zwischen dem Zellenrad und dem Gehäuse der Zellenradschleuse entspricht, wie oben bereits erwähnt, dem Spalt zwischen dem Zellenradumfang und der Innenwand des Gehäuses der Zellenradschleuse. Das Laufspiel lässt sich daher durch eine entsprechende konstruktive Auslegung der Zellenradschleuse und/oder durch Verwendung geeigneter Dichtleisten am Umfang des Zellenrads einstellen. Werden Dichtleisten verwendet, so können diese insbesondere bei schleißenden Schüttgutern nachstellbar am Zellenrad angeordnet sein. Bei nichtschleißenden oder nicht stark schleißenden Schüttgütern können im Gehäuse passgenau aufgenommene Zellenräder ohne Nachstellmöglichkeit zum Einsatz kommen. Das Laufspiel der Zellenradschleuse wird in Abhängigkeit von den oben genannten Parametern (Fließeigenschaft des auszutragenden Schüttguts, Förderdruck der Druckförderanlage, Zellenraddrehzahl) innerhalb eines eng begrenzten, definierten Bereichs eingestellt. Das erforderliche oder passende Laufspiel, das den durch Leckage erhaltenen konstruktionsbedingten Anteil der Falschluft bestimmt, lässt sich in Abhängigkeit von den oben genannten Parametern ohne weiteres rechnerisch und/oder experimentell bestimmen und so passend für das jeweilige Schüttgut einstellen.

Die Zellenraddrehzahl der Zellenradschleuse und der Förderdruck der pneumatischen Druckförderanlage bestimmen den über die Zellen in den Zulaufbereich der Zellenradschleuse mitgenommenen, betriebsbedingten Anteil der Falschluft. Durch eine genaue Steuerung, ggf. mit Überwachung, des Förderdrucks der Druckförderanlage und der Zellenraddrehzahl der Zellenradschleuse lässt sich daher der in den betriebsbedingte Anteil der Falschluft beeinflussen und einstellen.

Die oben genannten Parameter können in einem, beispielsweise dreidimensionalen, Kennfeld dargestellt sein, aus dem das Laufspiel abgelesen oder ermittelt werden kann. Die Zellenraddrehzahl der Zellenradschleuse und der Förderdruck der Druckförderanlage sind beispielsweise so bestimmt, dass eine erforderliche Schüttgutaustragsleistung erreicht wird. Das Laufspiel ist dann in Abhängigkeit von der Fließeigenschaft des auszutragenden Schüttguts und für die bestimmte Zellenraddrehzahl und den bestimmten Förderdruck so eingestellt, dass in der Summe ein für das auszutragende Schüttgut passender Falschluftdurchsatz erhalten wird.

Im Zulaufbereich der Zellenradschleuse bildet sich im Betrieb des Systems aufgrund des Falschluftdurchsatzes ein schwach pulsierender Überdruck, der sich in Form von Druckwellen, Luftblasen oder dergleichen vom Zulaufbereich der Zellenradschleuse aus in dem in Schüttgutauslaufrichtung vor der Zellenradschleuse befindlichen Schüttgutvolumen bis in den Schüttgutbehälter hinein fortpflanzt und dadurch das Schüttgutvolumen auflockert. Der durch den Falschluftdurchsatz bewirkte Überdruck schwankt in einem eng begrenzten Druckbereich, der einerseits ausreichend hoch ist, um das Schüttgutvolumen vor der Zellenradschleuse zu fluidisieren, andererseits aber gerade nicht so hoch ist, dass er den Schüttgutauslauf be- oder verhindert. Druckmessungen im Schüttgutbehälter, d.h. im Schüttgutvolumen vor der Zellenradschleuse, in Praxistests eines erfindungsgemäßen Systems haben ergeben, dass für die meisten Schüttgüter (für über 90 % der Schüttgüter) eine ausreichende Fluidisierung allein durch den Falschluftdurchsatz erreicht wird, wenn der Überdruck in einem Bereich von etwa 0,2 bis 0,5 bar, d.h. bei etwa 0,3 bar, gegenüber dem Außenumgebungsdruck liegt. Ein kurzzeitiger Druckanstieg über den definierten Druckbereich hinaus lässt sich durch eine oder mehrere Entlüftungsöffnungen und/oder ein oder mehrere Entlüftungsventile am Gehäuse der Zellenradschleuse und/oder auf Seiten des Schüttgutbehälters verhindern.

Das erfindungsgemäße System macht sich daher die bei Zellenradschleusen eigentlich unerwünschte Fremd- oder Falschluft zunutze, um die Fließfähigkeit des zur Zellenradschleuse hin auslaufenden Schüttguts zu erhöhen. Erfindungsgemäß geht es also nicht um eine herkömmlich angestrebte größtmögliche Minimierung sondern um eine genaue Einstellung oder Optimierung des Falschluftdurchsatzes. Durch eine geeignete Abstimmung der oben diskutierten Parameter lässt sich ein Falschluftdurchsatz erhalten, der für die meisten Schüttgüter allein ausreicht, um das auszutragende Schüttgut soweit zu fluidisieren, dass wie bei herkömmlichen Systemen eine nahezu vollständige Entleerung erreicht wird, allerdings ohne die eingangs diskutierten Vorrichtung zu benötigen. Eine aktive Druckbeaufschlagung des Schüttguts im Auslauftrichter des Schüttgutbehälters oder andere zusätzliche Maßnahmen sind damit grundsätzlich nicht erforderlich. Das erfindungsgemäße System ermöglicht somit nahezu vollständige gravitative Entleerung (>99%) eines Schüttgutbehälters mit einem konstruktiv einfachen Aufbau.

Die Zellenradschleuse ist vorzugsweise von einer Durchblase- oder Austragsschleuse gebildet. Diese beiden Schleusentypen haben sich in Praxistests als geeignet erwiesen.

Der Schüttgutbehälter ist erfindungsgemäß aus einem formstabil transportierbaren Schüttgutbehälter mit einem Auslauftrichter und einem Druckausgleichssystem für einen Druckausgleich zwischen der im Schüttgutbehälter eingeschlossenen Luft und der Außenumgebung gebildet.

Der Schüttgutbehälter kann aus einer Vielzahl von beispielsweise stoffschlüssig miteinander verbundenen, formstabilen Flächenelementen aus einem für die Befüllung, den Transport und die Entleerung von staubartigen und/oder rieselfähigen Schüttgütern geeigneten, reaktionsinerten und adhäsionsmindernden Material gebildet sein. Geeignete Materialien sind Metallbleche, vorzugsweise Aluminiumbleche, Kunststoffplatten, vorzugsweise glasfaserverstärkte Kunststoffplatten, und/oder Holzplatten, vorzugsweise Sperrholzplatten. Selbstverständlich sind auch andere gängige reaktionsinerte und adhäsionsmindernde Materialien, wie z. B. Gummiplatten oder beschichtete bzw. lackierte Stahlplatten, oder Kombinationen aus den genannten Materialien möglich. Im Falle von Materialkombinationen, wie z. B. aluminiumbeschichteten Sperrholzplatten, liegt die reaktionsinertere Oberfläche selbstverständlich auf Seiten des geladenen Stückguts. Die weiteren Materialparameter, wie Oberflächenbeschaffenheit (im Besonderen deren Rauheit), etc., werden in Abhängigkeit von der Beschaffenheit des im Schüttgutbehälter aufzunehmenden Schüttguts gewählt. In einer bevorzugten Ausführungsform ist der Schüttgutbehälter aus einer Vielzahl von im Wesentlichen nahtlos, insbesondere stoffschlüssig, aneinandergefügten Flächenelementen, insbesondere Metallblechen vorzugsweise aus Aluminium, gebildet.

Des Weiteren ist in der bevorzugten Ausführungsform nach dem Vorbild der eingangs erwähnten EP 1661824 A2 oder DE 202009015602 U1 der Schüttgutbehälter strukturell in einen im Wesentlichen quaderförmigen Speicherkörper und den Auslauftrichter unterteilt, wobei der Auslauftrichter einstückig, insbesondere stoffschlüssig, an einen mehr oder weniger quaderförmigen Speicherkörper angefügt, und zwar vorzugsweise so, dass der Auslauftrichter an die Stirnkanten der Boden-, Decken- und Längsseitenwände des Speicherkörpers unmittelbar angefügt ist. In dieser bevorzugten Ausführungsform zeichnet sich der erfindungsgemäße Schüttgutbehälter nicht nur durch eine einfache Herstellung und eine hohe Stabilität aus, sondern es ist gleichzeitig sichergestellt, dass der Speicherkörper im Wesentlichen stufenlos in den Auslauftrichter übergeht, was den Schüttgutauslauf erleichtert. Ein derartiger Schüttgutbehälter hat sich in Praxistest besonders bewährt, da der Auslauftrichter an den Speicherkörper ohne merkliche Übergänge, wie Kanten, etc. angefügt werden kann, die dem Schüttgutauslauf einen Widerstand entgegensetzen.

Der Schüttgutbehälter ermöglicht bei angeschlossener Zellenradschleuse und geschlossener(n) Einfüllöffnung(en) einen Druckausgleich allein über das Druckausgleichssystem, d.h. er ist ansonsten luftdicht abgeschlossen, es erfolgt also kein anderweitiger Luftaustausch mit der Außenumgebung. Ein derartiger Schüttgutbehälters kann daher bei Außenumgebungsdruck allein durch den auf den Falschluftdurchsatz zurückzuführenden, schwach pulsierenden Überdrück entleert werden, der das Schüttgutvolumen in Form von Druckwellen, Luftblasen oder dergleichen durchwandert.

Das erfindungsgemäße System umfasst des Weiteren erfindungsgemäß ein Traggestell, das den Schüttgutbehälter in einer Lage trägt, in der das Schüttgut über den Auslauftrichter aus dem Schüttgutbehälter gravitativ auslaufen kann. Das Traggestell ist erfindungsgemäß als ein stationäres oder mobiles Kippgestell ausgeführt, das den Schüttgutbehälter aus einer im Wesentlichen horizontalen Transportlage in eine definierte Schräg- oder Vertikallage kippen kann. In der definierten Schräg- oder Vertikallage erfolgt der Auslauf aus dem Schüttgutbehälter daher bei Außenumgebungsdruck und gravitativ.

Durch das Zusammenspiel eines geeignet ausgebildeten Schüttgutbehälters mit dem erfindungsgemäßen System, das eine Fluidisierung des Schüttguts bewirkt, wird eine nahezu vollständige Entleerung des Schüttgutbehälters erreicht, ohne dass eine aktive Druckbeaufschlagung des Schüttgutbehälters, z.B. durch eine Druckluftdüsenanordnung oder eine luftdurchlässige Auskleidung im Auslauftrichter, oder andere Auslaufhilfen, wie z. B. Räumarme, Schwingtrichter, Rüttler, Rührer, erforderlich wären. Gleichwohl sind zusätzliche Auslauf- oder Austraghilfen nicht ausgeschlossen. Insbesondere kann am Auslauftrichter des Schüttgutbehälters eine Druckluftdüsenanordnung vorgesehen sein, um das im Auslauftrichter anstehende Schüttgutmaterial bei Bedarf mit temporären Druckluftstößen zu beaufschlagen. Im Unterschied zu herkömmlichen Systemen, wie sie eingangs diskutiert wurden, ist erfindungsgemäß eine permanente Drucklufteinspeisung aber weder erforderlich noch vorgesehen. Ein Schüttgutbehälter in einer der oben beschriebenen Ausführungsformen erweitert daher das erfindungsgemäße System in einer vorteilhaften Weise.

Wenn in der definierten Schräg- oder Vertikallage des Schüttgutbehälters, bei der es sich - im Hinblick auf ein schrittweises Ankippen des Schüttgutbehälters - um die für eine vollständige Entleerung erforderliche Endlage des Schüttgutbehälters handelt, eine geometrische Mittelachse des Auslauftrichters im Wesentlichen vertikal ausgerichtet ist, erfährt das auslaufende Schüttgut den geringsten Widerstand, wodurch der Schüttgutauslauf aus dem Schüttgutbehälter zusätzlich unterstützt wird.

Das oben erwähnte Druckausgleichssystem weist erfindungsgemäß eine aus mehreren Ventilen gebildete Ventilanordnung auf, die den Luftdruck im Schüttgutbehälter oberhalb der Schüttgutvolumens im Schüttgutbehälter auf Außenumgebungsdruckniveau hält. Die Ventilanordnung kann hierzu ein Überdruckventil, ein Unterdruckventil und ein Sicherheitsventil enthalten, die den Druck im Schüttgutbehälter oberhalb des Schüttgutvolumens in einem eng begrenzten Bereich um den Außendruck herum halten. Das Druckausgleichssystem kann im Besonderen einen Druckausgleich zwischen der im Schüttgutbehälter eingeschlossenen Luft und einem vom Innenvolumen des Schüttgutbehälters abgetrennten Be- und Entlüftungsschacht bewirken, der im Bereich der vom Auslauftrichter abgewandten Stirnseite des Schüttgutbehälters vorgesehen ist. Erfindungsgemäß ist der Auslauftrichter über eine schwingungsentkoppelnde Rohrleitung mit der an einem Kippgestell stationär angeordneten Zellenradschleuse verbunden. Durch die Rohrleitung kann in jeder Kipplage des Schüttgutbehälters eine dichte Verbindung zwischen dem Auslauftrichter und der Zellenradschleuse hergestellt werden. Außerdem ist die Zellenradschleuse vom Schüttgutbehälter schwingungsentkoppelt angeordnet.

Die Rohrleitung umfasst erfindungsgemäß eine zwischen dem Auslauftrichter und der Zellenradschleuse angeordnete Andockstation. Über die Andockstation kann der Schüttgutbehälter an die stationär gehaltene Zellenradschleuse kontrolliert und mit der erforderlichen Dichtheit angedockt werden.

Die Andockstation ist erfindungsgemäß aus einem an die Zellenradschleuse angeflanschten Unterteil und einem mit dem Auslauftrichter verbundenen und am Unterteil schwingfähig gelagerten Oberteil gebildet. Somit kann die Zellenradschleuse durch die Andockstation Toleranzen abfangen und trotzdem luftdicht mit dem Schüttgutbehälter verbunden werden und darüber hinaus auch noch potentiell auftretende Schwingungen abpuffern. Zwischen dem Auslauftrichter und dem Oberteil der Andockstation kann ein Schlauch- oder Rohrleitungselement angeordnet sein, das mit seinem vom Auslauftrichter fernen Endabschnitt in das Oberteil der Andockstation eintaucht und über eine zwischen dem Oberteil und dem Schlauch- oder Rohrleitungselement angeordnete Dichtung im Oberteil dicht aufgenommen ist.

Nach dem Vorbild der EP 1661824 A2 oder DE 202009015902 U1 ist der Schüttgutbehälter vorteilhaft in einen Seecontainer, vorzugsweise ISO-Seecontainer, integriert und über den Seecontainer auf dem Kippgestell abgestützt. Die Anordnung des Schüttgutbehälters in einem herkömmlichen Seecontainer ermöglicht eine stabile Lagerung des Schüttgutbehälters nicht nur zum Zweck des Transports mittels herkömmlicher Transportmittel, wie LKW und Schiff, sondern auch zur Entleerung, da sich der Schüttgutbehälter über den Seecontainer mittels eines z.B. aus der EP 1661824 A2 oder DE 202009015902 U1 bekannten Kippgestells ohne Probleme in eine gewünschte Kipplage bringen lässt. Zudem lässt sich am Kippgestell die Zellenradschleuse und dergleichen ohne größeren technischen Aufwand stationär anbringen, was eine kontrollierte Andockung des Schüttgutbehälters an die Zellenradschleuse vereinfacht.

Kennzeichen des erfindungsgemäßen Verfahrens ist die Abstimmung des Laufspiels zwischen dem Zellenrad und dem Gehäuse der Zellenradschleuse, des Förderdrucks der Druckförderanlage und der Zellenraddrehzahl der Zellenradschleuse in Abhängigkeit von den Fließeigenschaften des Schüttguts in der Weise aufeinander, dass ein definierter Falschluftdurchsatz durch die Zellenradschleuse hindurch erhalten wird, der das in Schüttgutauslaufrichtung vor der Zellenradschleuse anstehende Schüttgut Schüttgut zum Fließen anregt (fluidisiert).

Im Folgenden werden mit Hilfe der beigefügten Zeichnungen verschiedene Ausführungsbeispiele des erfindungsgemäßen Systems vorgestellt.
Fig. 1A und 1B zeigen schematisch ein erstes Ausführungsbeispiel eines erfindungsgemäßen Systems.
Fig. 2A bis 2C zeigen einen ISO-Seecontainer mit eingeschobenem Schüttgutbehälter des erfindungsgemäßen Systems in verschiedenen Ansichten.
Fig. 3A bis 3C zeigen einen Schüttgutbehälter des erfindungsgemäßen Systems in verschiedenen Ansichten;
Fig. 4A bis 4D zeigen den ISO-Seecontainer aus Fig. 2A bis 2C in verschiedenen Ansichten.
Fig. 5A und 5B zeigen eine Seitenansicht bzw. einen Längsschnitt einer Andockstation des erfindungsgemäßen Systems.
Fig. 6A und 6B zeigen einen Längs- bzw. Querschnitt einer Durchblaseschleuse des erfindungsgemäßen Systems.
Fig. 7 zeigt schematisch ein zweites Ausführungsbeispiel des erfindungsgemäßen Systems.
Fig. 8 zeigt schematisch ein alternatives, nicht erfindungsgemäßes System.

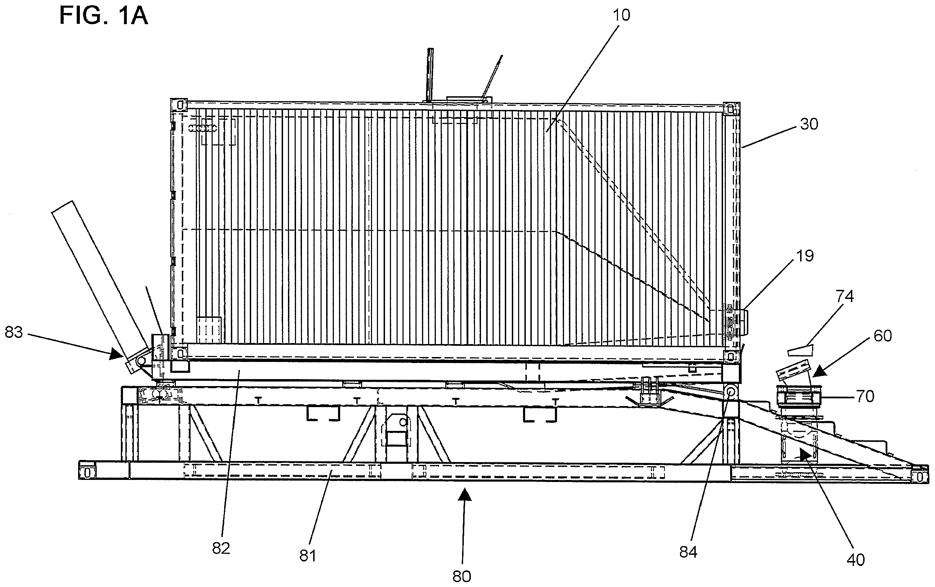

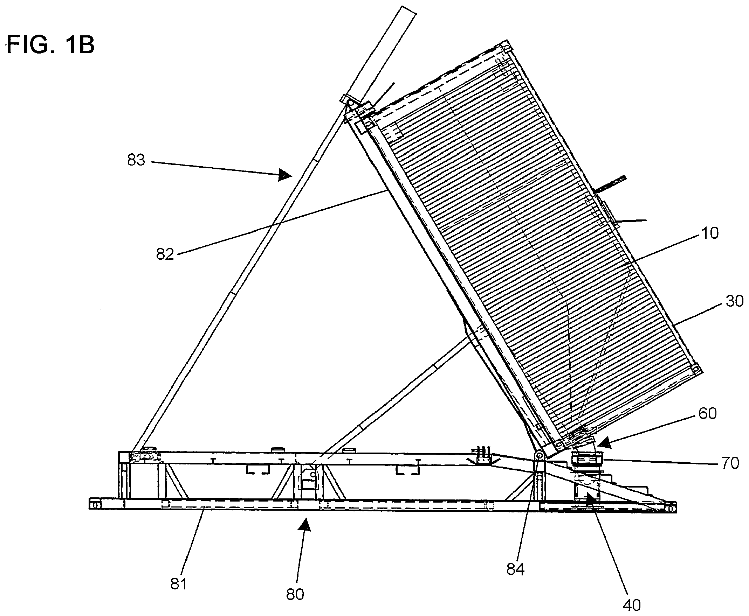

In dem in Fig. 1A und 1B gezeigten ersten Ausführungsbeispiel ist ein zu entleerender Schüttgutbehälter 10 in einem ISO-Seecontainer 30 angeordnet, der von einem Traggestell 80 getragen wird.

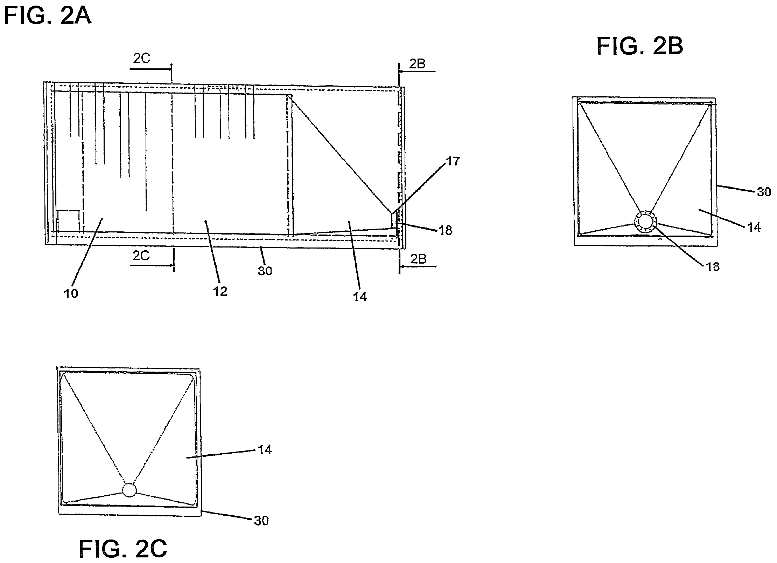

Fig. 2A bis 2C zeigen den ISO-Seecontainer 30 mit eingeschobenem Schüttgutbehälter 10 in verschiedenen Ansichten. Fig. 2B zeigt schematisch einen Blick in den ISO-Seecontainer 30 an der Stelle 2B-2B in Fig. 2A. Fig. 2C zeigt schematisch einen Blick in den ISO-Seecontainer 30 an der Stelle 2C-2C in Fig. 2A.

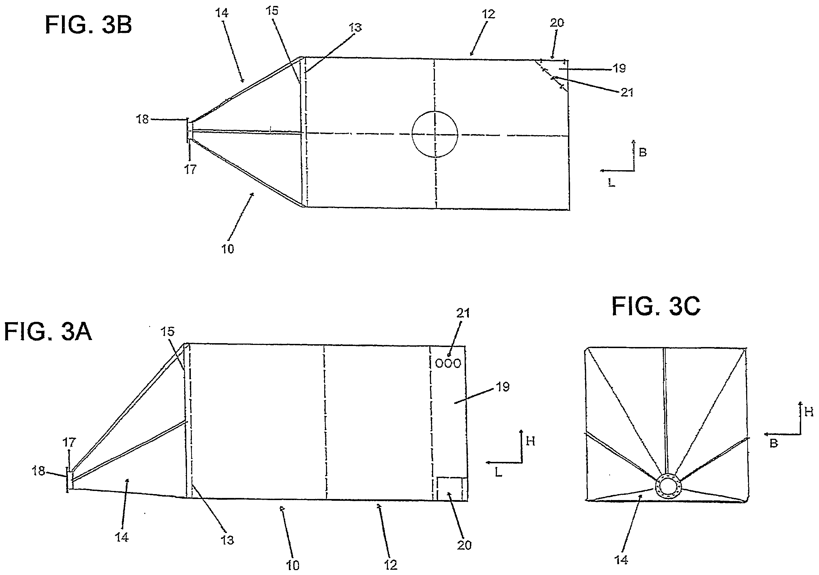

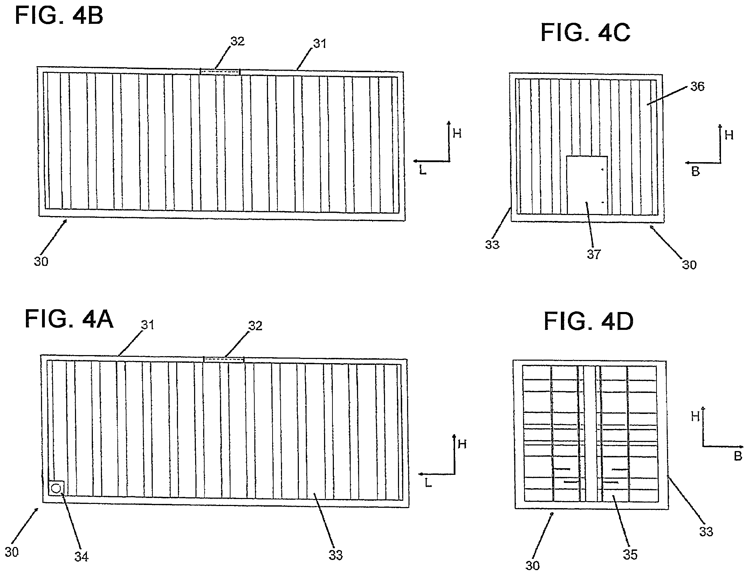

Der Aufbau des Schüttgutbehälters 10 und der Aufbau des ISO-Seecontainers 30 ergeben sich aus Fig. 3A bis 3C bzw. Fig. 4A bis 4D und werden im Folgenden kurz erläutert.

Der in Fig. 3A bis 3C gezeigte Schüttgutbehälter 10 entspricht dem in der DE 202009015902 U1 gezeigten und beschriebenen Schüttgutbehälter. In Fig. 3A bis 3C sind die Längs-, Breiten- und Höhenrichtung durch Pfeile L, B bzw. H angegeben. Der Pfeil L zeigt in Richtung der Verjüngung eines Auslauftrichters 14 des Schüttgutbehälters 10. Fig. 3A zeigt eine Seitenansicht, Fig. 3B eine Draufsicht und Fig. 3C eine Vorderansicht des Schüttgutbehälters 10 in horizontaler Lage. Die horizontale Lage entspricht einer Transportlage des Schüttgutbehälters 10.

Die Außenabmessungen des formstabilen Schüttgutbehälters 10 sind auf die Innenabmessungen des ISO-Seecontainers 30 in der Weise abgestimmt, dass der Schüttgutbehälter 10 mit einem definierten seitlichen Spiel in den ISO-Seecontainer 30 eingeschoben werden kann, gleichzeitig aber den Laderaum des ISO-Seecontainers möglichst optimal ausnutzt. Wie aus Fig. 3A bis 3C ersichtlich ist, lässt sich der Schüttgutbehälter 10 strukturell in einen im Wesentlichen quaderförmigen Speicherkörper 12 und den oben erwähnten Auslauftrichter 14 unterteilen. Der Auslauftrichter 14 verlängert den Speicherkörper 12 und bildet eine Stirnseite des Speicherkörpers 12. Der aus dem Speicherkörper 12 und dem Auslauftrichter 14 gebildete Schüttgutbehälter 10 ist als ein einstückig handhabbares, d.h. formstabiles, Gebilde ausgebildet. Der Speicherkörper 12 und der Auslauftrichter 14 sind in der vorliegenden Ausführungsform jeweils aus einer Vielzahl von miteinander verschweißten Alublechen gebildet. Der Speicherkörper 12 und der Auslauftrichter 14 wurden zunächst separat gefertigt und dann durch Verschweißung zu einem formstabilen Gebilde zusammengefügt, das in den Fig. 3A bis 3C gezeigt ist. Während der Speicherkörper 12 im Wesentlichen quaderförmig ausgebildet ist, hat der Auslauftrichter 14 eine sich von einer Fügestelle 13 zwischen dem Speicherkörper 12 und dem Auslauftrichter 14 weg pyramidenstumpfartig verjüngende Form. Der Auslauftrichter 14 ist im Besonderen mit seinen dem Speicherkörper 12 zugewandten Stirnkanten an die Stirnkanten des Speicherkörpers 12 unmittelbar angefügt. Die Fügestelle 13 zwischen dem Speicherkörper 12 und dem Auslauftrichter 14 ist außenseitig zusätzlich durch eine ringartig umlaufende Verstärkung 15 gesichert.

Zum Anschluss an eine externe Zellenradschleuse mündet der Auslauftrichter 14 an seinem vom Speicherkörper 12 abgewandten Ende in ein rohrartiges Ansatzstück 17, das einen ringartigen Anschlussflansch 18 aufweist. Das rohrartige Ansatzstück 17 ist an den Auslauftrichter 14 angeschweißt. An den Anschlussflansch 18 ist ein in Fig. 1A und 1B zu sehender Absperrklappenverschluss 19 zum Öffnen/Verschließen des Auslauftrichters 14 angeflanscht.

Im Bereich seiner vom Auslauftrichter 14 abgewandten Stirnseite weist der Speicherkörper 12 einen Be- und Entlüftungsschacht 19 auf, der über eine bodenseitig angeordnete Öffnung 20 und über ein deckenseitig vorgesehenes Druckausgleichssystem 21 einen Druckausgleich zwischen dem Innenvolumen des Schüttgutbehälters 12 und der Außenumgebung, also dem Laderaum des ISO-Seecontainers 30, ermöglicht. Das Druckausgleichssystem 21 weist eine aus mehreren Ventilen gebildete Ventilanordnung auf, die den Luftdruck im Schüttgutbehälter oberhalb des im Schüttgutbehälter vorhandenen Schüttgutvolumens auf Außenumgebungsdruckniveau hält. Die Ventilanordnung enthält hierzu im Besonderen ein Überdruckventil, ein Unterdruckventil und ein Sicherheitsventil, die den Druck im Schüttgutbehälter oberhalb des Schüttgutvolumens in einem eng begrenzten Bereich um den Außendruck herum halten. Darüber hinaus weist der Speicherkörper 12 im Bereich seiner Decke mindestens eine verschließbare Schüttguteinfüllöffnung 22 auf. Bei geschlossenem Absperrklappenverschluss und geschlossener Einfüllöffnung findet daher ein Druckausgleich allein über das Druckausgleichssystem 21 statt, d.h. der Schüttgutbehälter 10 ist ansonsten luftdicht abgeschlossen, so dass kein anderweitiger Luftaustausch mit der Außenumgebung erfolgt.

Der Schüttgutbehälter 10 ist gemäß Fig. 2A bis 2C in den in Fig. 4A bis 4D gezeigten ISO-Seecontainer 30 integriert. Fig. 4A bis 4D zeigen den üblichen Aufbau eines ISO-Seecontainers. Fig. 4A zeigt eine Seitenansicht, Fig. 4B die andere Seitenansicht, Fig. 4C eine Vorderansicht und Fig. 4D eine Rückansicht des ISO-Seecontainers 30. Die Längs-, Breiten- und Höhenrichtungen sind durch Pfeile L, B bzw. H angegeben. Die Orientierung der in Fig. 4A bis 4D verwendeten Pfeile entspricht derjenigen der in Fig. 3A bis 3C verwendeten Pfeile. Die aus Fig. 4A bis 4D ersichtliche horizontale Lage des ISO-Seecontainers 30 entspricht seiner Transportlage auf einem (nicht gezeigten) Fahrgestell, z. B. eines Sattelanhängers.

In der Decke 31 des Seecontainers 30 ist, wie es in Fig. 4B gezeigt ist, eine mittels eines oder mehrerer Deckel verschließbare Einfüllöffnung 32 vorgesehen, die hinsichtlich der Lage mit der oben erwähnten Einfüllöffnung 22 des Schüttgutbehälters 10 fluchtet. An der einen Längsseitenwand 33 ist, wie es aus Fig. 4A ersichtlich ist, eine Belüftungsöffnung 34 vorgesehen, die hinsichtlich der Lage mit der Belüftungsöffnung 20 des Schüttgutbehälters 10 fluchtet. Die in Fig. 4D zu erkennende Doppelflügeltür 35 des ISO-Seecontainers 30 bietet einen Zugang in den Laderaum des ISO-Seecontainers 30, und zwar über die gesamte Querschnittsfläche des Laderaums des ISO-Seecontainers 30. An der der Doppelflügeltür 35 gegenüber liegenden Stirnseitenwand 36 des ISO-Seecontainers 30 ist eine vorzugsweise von außen verschließbare Zugangstür 37 vorgesehen, die einen Zugang zu dem auf der Seite des Auslauftrichter 14 des Schüttgutbehälters 10 befindlichen Laderaumteil des ISO-Seecontainers 30 bietet.

Bezüglich weiterer technischer Details zum Aufbau des Schüttgutbehälters 10 und ISO-Seecontainers 30 sowie zur Anordnung und Befestigung des Schüttgutbehälters 10 im ISO-Seecontainer 30 sei auf die entsprechenden Angaben in der DE 202009015902 U1 verwiesen.

Das in Fig. 1A und 1B veranschaulichte System ist für eine gravitative Entleerung des im ISO-Seecontainer 30 angeordneten Schüttgutbehälters 10 ausgelegt. Die Entleerung des Schüttgutbehälters 10 erfolgt damit in der in Fig. 1B gezeigten Schräglage unter der Wirkung der Schwerkraft über den am Schüttgutbehälter 10 vorgesehenen Auslauftrichter 14. Der Schüttgutbehälter 10 wird (über den ISO-Seecontainer 30) mittels des Traggestells 80, das im ersten Ausführungsbeispiel als ein stationäres Kippgestell ausgeführt ist, aus der in Fig. 1A gezeigten, im Wesentlichen horizontalen Transportlage um beispielsweise etwa 60° in die in Fig. 1B gezeigte, definierte Schräglage angekippt. Das Kippgestell 80 ist aus einem auf einem Untergrund ruhenden Untergestell 81 und einem um eine Achse 84 am Untergestell 81 schwenkbeweglich angelenkten Tragrahmen 82 gebildet. Der Tragrahmen 82 ist mittels eines Hubmechanismus 83 gegenüber dem Untergestell 82 um die Achse 84 schwenkbar. Der Tragrahmen 82 trägt den ISO-Seecontainer 30, in den der zu entleerende Schüttgutbehälter 10 integriert ist. Je nach den Fließeigenschaften des Schüttguts kann der Schüttgutbehälter in einem Schritt, d.h. zügig, oder in mehreren Schritten, d.h. langsam, bis zum Erreichen der Schräglage angekippt werden, um eine allzu starke Komprimierung des Schüttguts zu verhindern, was den Schüttgutauslauf behindern könnte.

Das erfindungsgemäße System weist eine dem Auslauftrichter 14 in Schüttgutauslaufrichtung nachgeordnete Zellenradschleuse 40 und eine der Zellenradschleuse 40 nachgeordnete, nicht gezeigte pneumatische Druckförderanlage auf.

Wie es in Fig. 1A und 1B gezeigt ist, wird der Auslauftrichter 14 über eine schwingungsentkoppelnde Rohrleitung 60 mit der am Kippgestell 80 stationär angeordneten Zellenradschleuse 40 verbunden. Die Rohrleitung 60 umfasst eine zwischen dem Auslauftrichter 14 und der Zellenradschleuse 40 angeordnete Andockstation 70. Über die Andockstation 70 kann der Schüttgutbehälter 10 an die stationär gehaltene Zellenradschleuse 40 kontrolliert und mit der erforderlichen Dichtheit angedockt werden.

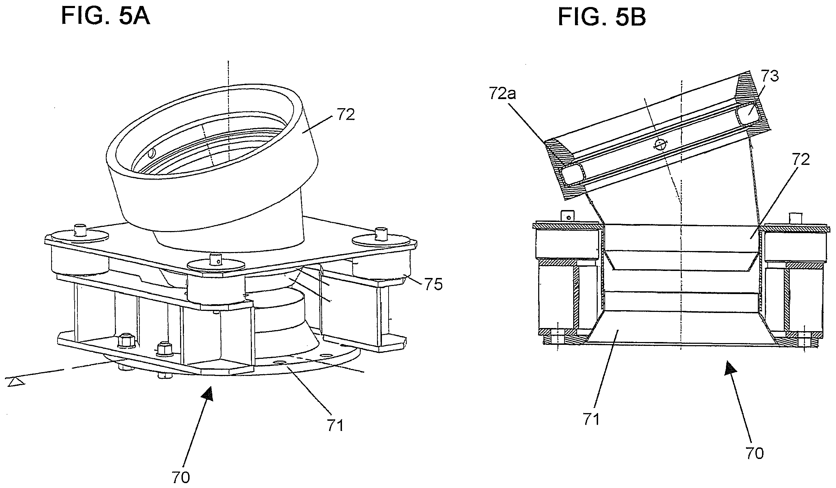

Die Andockstation 70 ist in Fig. 5A und 5B veranschaulicht. Sie ist im Wesentlichen aus einem an die Zellenradschleuse 40 anzuflanschenden Unterteil 71 und einem mit dem Auslauftrichter 14 zu verbindenden und am Unterteil 71 schwimmend gelagerten Oberteil 72 gebildet. Das Oberteil 72 ist über Gummipuffer 75 am Unterteil 71 abgestützt. Das Unterteil 71 ist wie die Zellenradschleuse 40 am Untergestell 81 des Kippgestells 80 stationär angebracht. Das Oberteil 72 taucht passgenau, aber axial verschieblich in das Oberteil 71 ein. Das Oberteil 72 und das Unterteil 71 sind jeweils aus einem oder mehreren Blechelementen zu rohrleitungsförmigen Bauteilen zusammengesetzt.

Das Oberteil 72 der Andockstation 70 ist über ein Schlauch- oder Rohrleitungselement 74 (vgl. Fig. 1A und Fig. 1B) mit dem Auslauftrichter 14 verbunden. Hierzu taucht das Schlauch- oder Rohrleitungselement 74 mit seinem vom Auslauftrichter 14 fernen Endabschnitt in das Oberteil 72 der Andockstation ein. Im Oberteil 72 ist in einer umlaufenden Ringnut 72a eine schlauchförmige Dichtung 73 angeordnet. Das Schlauch- oder Rohrleitungselement 74 ist daher im Oberteil 72 der Andockstation schwimmend, aber abgedichtet aufgenommen. Durch die so gestaltete Andockstation 70 und die nachgiebige Verbindung mit dem Schlauch- oder Rohrleitungselement 74 können daher toleranzbedingte Lagenungenauigkeiten zwischen dem Auslauftrichter 14 und der Zellenradschleuse 40 ausgeglichen werden. Gleichzeitig kann die Zellenradschleuse 40 über die Rohrleitung 60 luftdicht mit dem Auslauftrichter 14 verbunden werden. Darüber hinaus können bei der Entleerung des Schüttgutbehälters 10 möglicherweise auftretende Schwingungen abgepuffert werden.

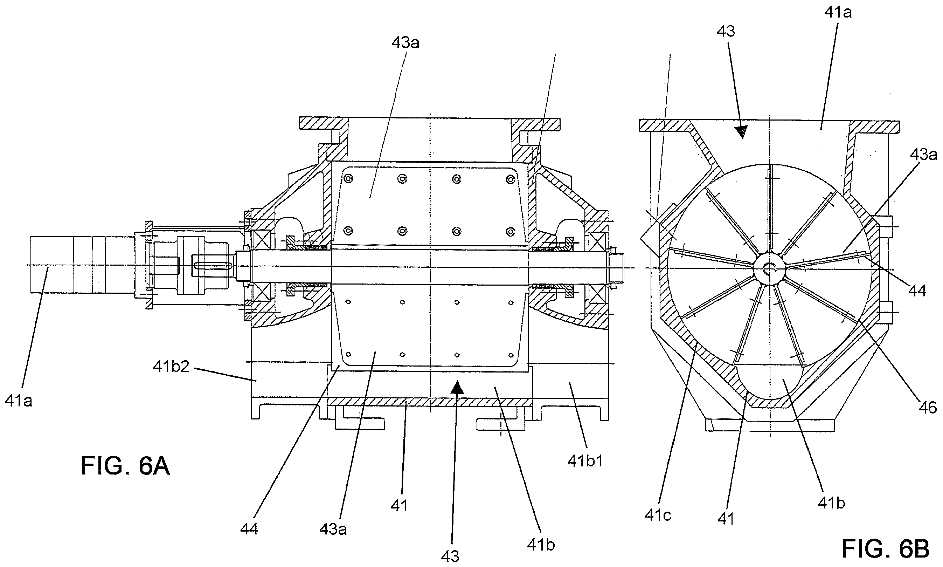

Die Zellenradschleuse 40 ermöglicht einen dosierten Auslauf des Schüttguts aus dem Schüttgutbehälter 10 in die der Zellenradschleuse 40 nachgeordnete (nicht gezeigte) pneumatische Druckförderanlage. Die Zellenradschleuse 40 ist eine Austrags- oder eine Durchblaseschleuse. In dem ersten Ausführungsbeispiel ist die Zellenradschleuse 40 eine Durchblaseschleuse, wie sie beispielsweise in Fig. 6A und 6B gezeigt ist. Die Zellenradschleuse 40 weist in an sich bekannter Weise ein Gehäuse 41 mit einem Zulaufschacht 41a (Zulaufbereich) und einem Auslaufkanal 41b (bei einer Austragsschleuse: einem Auslaufschacht) (Auslaufbereich) sowie ein in einer Gehäusebohrung 41c aufgenommenes und um eine Achse 41d drehbeweglich gelagertes Zellenrad 43 auf. Das Zellenrad 43 bildet eine Vielzahl von durch Flügeln 43a voneinander getrennten Zellen 43b aus. Das Zellenrad 43 ist mit einem geringen Durchmesseruntermaß in der Gehäusebohrung 41c aufgenommen. Am Umfang des Zellenrads 43, d.h. an den Stirnseiten der Flügel 43a, sind Dichtelemente in Form von Dichtleisten 44 vorgesehen, die den schmalen Spalt 46 (Arbeits- oder Laufspiel) zwischen den Flügeln 43a des Zellenrads 43 und der Innenumfangswand der Gehäusebohrung 41c des Gehäuses 41 der Zellenradschleuse 40, d.h. das Laufspiel der Zellenradschleuse 40, abdichten sollen.

Die (nicht gezeigte) pneumatische Druckförderanlage weist einen (nicht gezeigten) Kompressor zum Erzeugen eines Druckluftstroms mit einem bestimmten Förderdruck sowie eine Förderleitung zur Förderung des über die Zellenradschleuse 40 ausgetragenen Schüttgutvolumens auf. Der Kompressor ist mit einer Eingangsseite 41 b1 des Auslaufkanals 41b der Zellenradschleuse 40 verbunden. Die Ausgangsseite 41b2 des Auslaufkanals 41b mündet in die Förderleitung der Druckförderanlage.

Aufgrund des für eine Drehung des Zellenrads 43 erforderlichen Laufspiels der Zellenradschleuse 40 lässt sich nie gänzlich vermeiden, dass Luft aus dem Auslaufkanal 41b in den Zulaufschacht 41a einströmt. Daneben wird im Betrieb der Zellenradschleuse 40 von den leeren Zellen 43b des Zellenrads 43 ein Luftvolumen in den Zulaufschacht 41a gefördert. Im Unterschied zu herkömmlichen Systemen, denen eine größtmögliche Minimierung des Falschluftdurchsatzes durch die Zellenradschleuse hindurch angestrebt wird, geht es bei dem erfindungsgemäßen System darum, durch eine geschickte Abstimmung oder Optimierung des Laufspiels der Zellenradschleuse 40, des Förderdrucks der Druckförderanlage und der Drehzahl des Zellenrads 43 der Zellenradschleuse 40 in Abhängigkeit von den Fließeigenschaften des auszutragenden Schüttguts einen bestimmten Falschluftdurchsatz zu erhalten. Der Falschluftdurchsatz ist so ausgelegt, dass er allein ausreicht, um das im Zulaufbereich der Zellenradschleuse 40 befindliche Schüttgut zu fluidisieren. Der Zulaufbereich umfasst den Zulaufschacht 41a der Zellenradschleuse 40 sowie zumindest den zulaufschachtseitigen Bereich der Rohrleitung 60, in dem es aufgrund an sich bekannter Phänomene, wie Brückenbildung, etc. zu Stauungen kommen kann. Die Abstimmung der vorgenannten Parameter sieht so aus, dass der Zulaufbereich von einer bestimmten Falschluftmenge mit einem von der Druckförderanlage herrührenden Überdruck, der innerhalb eines vorab (in Abhängigkeit von den Fließeigenschaften des Schüttguts) definierten Druckbereichs liegt, durchströmt wird, um das im Zulaufbereich sowie im Schüttgutbehälter anstehende Schüttgutvolumen in Bewegung zu setzen oder zu halten. Um einen Druckanstieg über den definierten Druckbereich hinaus zu verhindern, kann das Gehäuse 41 der Zellenradschleuse 40 eine oder mehrere Entlüftungsöffnungen und/oder Entlüftungsventile haben. Derartige Entlüftungsöffnungen und/oder Entlüftungsventile sind an sich bekannt, so dass hierauf nicht näher eingegangen werden muss.

Zur Entleerung des Schüttgutbehälters 10 wird zunächst der ISO-Seecontainer 30, in dem der Schüttgutbehälter 10 aufgenommen ist, mit Hilfe des Kippgestells 80 aus der in Fig. 1A gezeigten Transportlage in die in Fig. 1B gezeigte Schräglage angekippt. Dabei wird ein aus der Zugangstür 37 des ISO-Seecontainers 10 ragender Rohrstutzen, der mit dem Absperrklappenverschluss 19 verbunden ist, über das Schlauch- oder Rohrleitungselement 74 mit der Rohrleitung 60 verbunden. Anschließend kann der Absperrklappenverschluss 19 zur Entleerung des Schüttgutbehälters 10 geöffnet werden. Zur Entleerung werden die Drehzahl des Zellenrads 43 der Zellenradschleuse 40 und der Förderdruck der pneumatischen Druckförderanlage so eingestellt (bzw. sind vorab bereits so eingestellt), dass der bestimmte Falschluftdurchsatz erhalten wird, der das Schüttgutvolumen vor der Zellenradschleuse 40 fluidisiert. Im Betrieb der Zellenradschleuse 40 entnimmt die jeweils im Bereich des Zulaufschachts 41a befindliche Zelle 43b eine Schüttgutmenge aus dem Zulaufschacht 41a, die maximal dem Volumen der Zelle 43b entspricht, und transportiert die entnommene Schüttgutmenge in den Auslaufkanal 41b, wo es von der den Auslaufkanal 41b durchströmenden Druckluft in die Förderleitung gefördert wird.

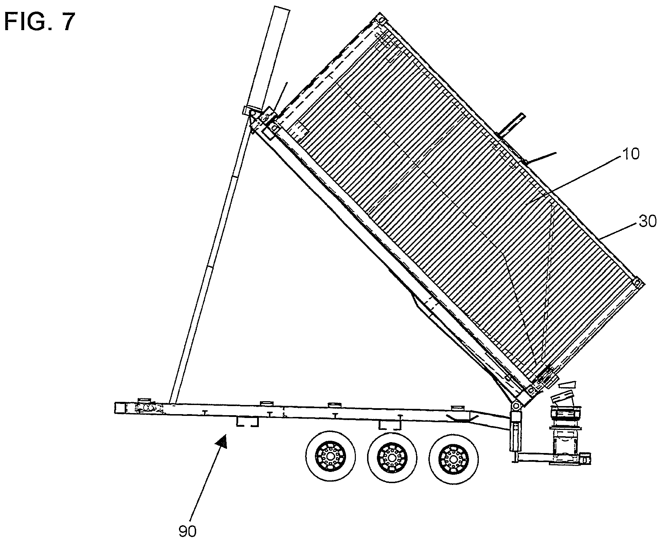

Fig. 7 zeigt ein zweites Ausführungsbeispiel des erfindungsgemäßen Systems. das zweite Ausführungsbeispiel unterscheidet sich vom ersten Ausführungsbeispiel lediglich darin, dass der Schüttgutbehälter 10 (über den ISO-Seecontainer 30) auf einem Traggestell in Form eines mobilen Kippgestells 90 (Fahrgestell) angeordnet ist.

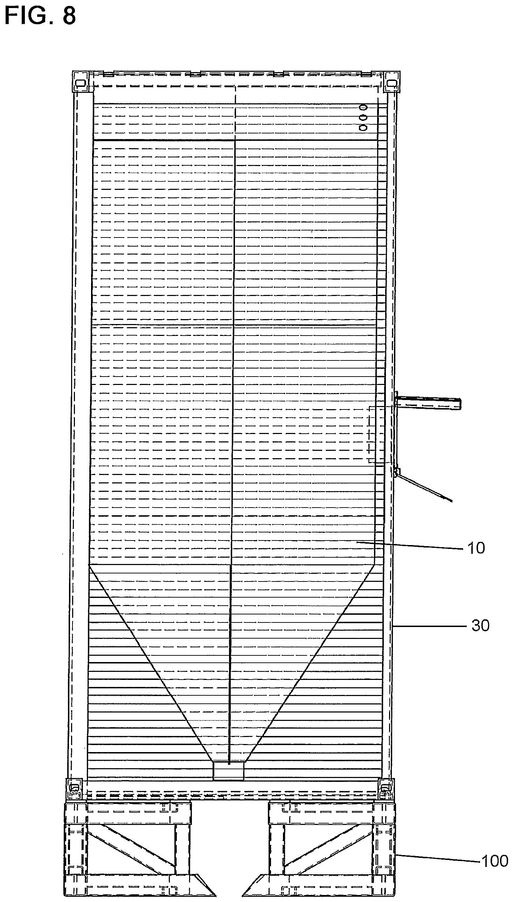

Fig. 8 zeigt ein alternatives, nicht erfindungsgemäßes System. Dieses System unterscheidet sich vom ersten und zweiten Ausführungsbeispiel im Wesentlichen nur darin, dass der Schüttgutbehälter 10 (über den ISO-Seecontainer 30) in einer Vertikallage auf einem stationären Traggestell 100 angeordnet ist und eine Auslauföffnung des Auslauftrichters des Schüttgutbehälters bezogen auf dessen Querschnittsfläche mittig liegt. Das Traggestell 100 ermöglicht im Unterschied zu den Kippgestellen 80 und 90 der ersten und zweiten Ausführungsbeispiele keine Änderung der Lage des Schüttgutbehälters 10. In Fig. 8 ist die Rohrleitung, Zellenradschleuse und pneumatische Druckförderanlage nicht gezeigt.

## Patentansprüche

1. System zum gravitativen Entleeren eines Schüttgutbehälters (10) mit einem formstabil transportierbaren Schüttgutbehälter (10), wobei der Schüttgutbehälter (10) strukturell in einen im Wesentlichen quaderförmigen Speicherkörper (12) und einen Auslauftrichter (14) unterteilt ist, der eine der beiden Stirnseiten des Speicherkörpers (12) bildet,
einer in Schüttgutauslaufrichtung dem Auslauftrichter (14) des Schüttgutbehälters (10) nachgeordneten Zellenradschleuse (40) und einer der Zellenradschleuse (40) nachgeordneten pneumatischen Druckförderanlage,
einem Druckausgleichssystem (21) zum Druckausgleich zwischen der im Schüttgutbehälter (10) eingeschlossenen Luft und der Außenumgebung, wobei das Druckausgleichssystem (21) eine aus mehreren Ventilen gebildete Ventilanordnung umfasst, die den Druck oberhalb des Schüttgutvolumens im Schüttgutbehälter (10) auf Außenumgebungsdruckniveau hält,
einem Traggestell (80; 90; 100), das den Schüttgutbehälter(10) trägt, und das als ein Kippgestell zum Kippen des Schüttgutbehälters (10) aus einer im Wesentlichen horizontalen Transportlage in eine definierte Schräg- oder Vertikallage ausgeführt ist,
**dadurch gekennzeichnet, dass** das Laufspiel der Zellenradschleuse (40) in Abhängigkeit von der Fließeigenschaft des auszutragenden Schüttguts für einen bestimmten Förderdruck und eine bestimmte Zellenraddrehzahl so ausgelegt ist, dass im Betrieb des Systems ein definierter Falschluftdurchsatz durch die Zellenradschleuse (40) hindurch erhalten wird, der allein ausreicht, um das in Schüttgutauslaufrichtung vor der Zellenradschleuse (40) anstehende Schüttgut zu fluidisieren,
dass der Auslauftrichter (14) über eine Rohrleitung (60) mit der am Traggestell (80; 90; 100) stationär angeordneten Zellenradschleuse (40) verbunden ist,
die Rohrleitung (60) eine zwischen dem Auslauftrichter (14) und der Zellenradschleuse (40) angeordnete Andockstation (70) umfasst und
die Andockstation (70) aus einem an die Zellenradschleuse (40) angeflanschten Unterteil (71) und einem mit dem Auslauftrichter (14) verbundenen und am Unterteil (71) schwimmend gelagerten Oberteil (72) gebildet ist.

2. System nach Anspruch 1, **dadurch gekennzeichnet, dass** das Laufspiel der Zellenradschleuse (40) fest eingestellt ist.

3. System nach Anspruch 1, **dadurch gekennzeichnet, dass** das Laufspiel der Zellenradschleuse (40) nachstellbar ist.

4. System nach einem der vorhergehenden Ansprüche, **dadurch gekennzeichnet, dass** die Zellenradschleuse (40) eine Durchblase- oder Austragschleuse ist.

5. System nach einem der vorhergehenden Ansprüche, **dadurch gekennzeichnet, dass** der Schüttgutbehälter (10) in einen Seecontainer (30) integriert ist.

6. Verfahren zum Entleeren eines Schüttgutbehälters mit Hilfe eines Systems nach einem der vorhergehenden Ansprüche, wobei in Abhängigkeit von der Fließeigenschaft des auszutragenden Schüttguts das Laufspiel der Zellenradschleuse (40), der Förderdruck der Druckförderanlage und die Zellenraddrehzahl der Zellenradschleuse (40) in der Weise aufeinander abgestimmt werden, dass im Betrieb des Systems ein definierter Falschluftdurchsatz durch die Zellenradschleuse (40) hindurch erhalten wird, der allein ausreicht, um das in Schüttgutauslaufrichtung vor der Zellenradschleuse (40) anstehende Schüttgut zu fluidisieren.

7. Verfahren nach Anspruch 6, **dadurch gekennzeichnet, dass** der Schüttgutbehälter (10) aus einer im Wesentlichen horizontalen Transportlage in eine definierte Schräg- oder Vertikallage gekippt wird, in der eine geometrische Mittelachse eines Auslauftrichters (14) des Schüttgutbehälters (10) im Wesentlichen vertikal ausgerichtet ist.

8. Verfahren nach Anspruch 6 oder 7, **dadurch gekennzeichnet, dass** der Schüttgutbehälter (10) in Abhängigkeit von der Fließeigenschaft des Schüttguts in mehreren Schritten oder in einem Schritt aus einer im Wesentlichen horizontalen Transportlage in eine definierte Schräg- oder Vertikallage gekippt wird.

## Claims

1. System for emptying a bulk material container (10) using gravity, comprising
a bulk material container (10) which can be transported in a dimensionally stable manner, wherein the bulk material container (10) is structurally divided into an essentially cuboid-shaped storage body (12) and a discharge hopper (14) which forms one of the two front sides of the storage body (12),
a star feeder lock (40) arranged downstream of the discharge hopper (14) of the bulk material container (10) in the bulk material emptying direction and a pneumatic pressure conveyor system arranged downstream of the star feeder lock (40),
a pressure equalization system (21) for equalizing the pressure between the air enclosed in the bulk material container (10) and the external environment, wherein the pressure equalization system (21) comprises a valve assembly made of several valves which maintains the pressure above the bulk material volume in the bulk material container (10) at the level of the external environment pressure,
a bearer frame (80; 90; 100) which bears the bulk material container (10) and which is configured as a tilting frame for tilting the bulk material container (10) from an essentially horizontal transport position to a defined inclined position or vertical position,
**characterized in that** the running clearance of the star feeder lock (40) is designed in dependence on the flow property of the bulk material to be delivered for a predetermined discharge pressure and a predetermined star-feeder wheel speed such that a defined false air flow through the star feeder lock (40) is obtained during operation of the system, wherein this false air flow itself is sufficient to fluidize the bulk material present before the star feeder lock (40) in the bulk material emptying direction,
that the discharge hopper (14) is connected via a pipe (60) to the star feeder lock (40) stationarily arranged at the bearer frame (80; 90; 100)
the pipe (60) comprises a docking station (70) arranged between the discharge hopper (14) and the star feeder lock (40), and
the docking station (70) is formed of a lower part (71) flange-mounted to the star feeder lock (40) and an upper part (72) connected with the discharge hopper (14) and floatingly supported on the lower part (71).

2. System according to claim 1, **characterized in that** the running clearance of the star feeder lock (40) is fixedly set.

3. System according to claim 1, **characterized in that** the running clearance of the star feeder lock (40) is adjustable.

4. System according to one of the preceding claims, **characterized in that** the star feeder lock (40) is a blow-through airlock or discharge airlock.

5. System according to one of the preceding claims, **characterized in that** the bulk material container (10) is integrated in a sea container (30).

6. Method for emptying a bulk material container with the help of a system according to one of the preceding claims, wherein
in dependence on the flow property of the bulk material to be delivered, the running clearance of the star feeder lock (40), the discharge pressure of the pressure conveyor system, and a star-feeder wheel speed of the star feeder lock (40) are synchronized such that a defined false air flow through the star feeder lock (40) is obtained during operation of the system, wherein this false air flow itself is sufficient to fluidize the bulk material present before the star feeder lock (40) in the bulk material emptying direction.

7. Method according to claim 6, **characterized in that** the bulk material container (10) is tilted from an essentially horizontal transport position to a defined inclined position or vertical position, in which a geometric center axis of a discharge hopper (14) of the bulk material container (10) is essentially vertically orientated.

8. Method according to claim 6 or 7, **characterized in that** the bulk material container (10) in dependence on the flow property of the bulk material is tilted in several steps or in one step from an essentially horizontal transport position to a defined inclined position or vertical position.

## Revendications

1. Système de vidage gravitationnel d'un contenant de produit en vrac (10) comprenant
un contenant de produit en vrac (10) transportable indéformable, dans lequel le contenant de produit en vrac (10) est divisé structurellement en un corps de stockage (12) sensiblement parallélépipédique et en une trémie de décharge (14) qui forme l'une des deux faces frontales du corps de stockage (12),
une écluse à roue cellulaire (40) montée en aval de la trémie de décharge (14) du contenant de produit en vrac (10) dans la direction de décharge du produit en vrac et un système de refoulement pneumatique par pression monté en aval de l'écluse à roue cellulaire (40),
un système de compensation de pression (21) pour la compensation de pression entre l'air piégé dans le contenant de produit en vrac (10) et l'environnement extérieur, dans lequel le système de compensation de pression (21) comporte un ensemble de soupapes formé de plusieurs soupapes, qui maintient la pression au-dessus du volume de produit en vrac dans le contenant de produit en vrac (10) au niveau de la pression ambiante extérieure,
un cadre porteur (80 ; 90 ; 100), qui porte le contenant de produit en vrac (10), et qui est réalisé sous la forme d'un cadre basculant servant à faire basculer le contenant de produit en vrac (10) d'une position de transport sensiblement horizontale dans une position inclinée ou verticale définie,
**caractérisé en ce que** le jeu mécanique de l'écluse à roue cellulaire (40) est étudiée, en fonction de l'aptitude à l'écoulement du produit en vrac à décharger pour une pression de refoulement définie et une vitesse de rotation de roue cellulaire définie pour que, lorsque le système est en fonctionnement, un débit d'air rentré accidentellement défini soit maintenu à travers l'écluse à roue cellulaire (40), lequel suffit à fluidiser le produit en vrac en suspens devant l'écluse à roue cellulaire (40) dans la direction de décharge du produit en vrac,
**en ce que** la trémie de décharge (14) est reliée à l'écluse à roue cellulaire (40) montée fixe sur le cadre porteur (80 ; 90 ; 100) par l'intermédiaire d'une conduite (60),
la conduite (60) comporte une station d'arrimage (70) agencée entre la trémie de décharge (14) et l'écluse à roue cellulaire (40) et
la station d'arrimage (70) est formée d'une partie inférieure (71) fixée par bride à l'écluse à roue cellulaire (40) et d'une partie supérieure (72) reliée à la trémie de décharge (14) et montée flottante sur la partie inférieure (71) .

2. Système selon la revendication 1, **caractérisé en ce que** le jeu mécanique de l'écluse à roue cellulaire (40) est réglé de manière fixe.

3. Système selon la revendication 1, **caractérisé en ce que** le jeu mécanique de l'écluse à roue cellulaire (40) est ajustable.

4. Système selon l'une quelconque des revendications précédentes, **caractérisé en ce que** l'écluse à roue cellulaire (40) est une écluse à soufflage ou de décharge.

5. Système selon l'une quelconque des revendications précédentes, **caractérisé en ce que** le contenant de produit en vrac (10) est intégré dans un conteneur maritime (30).

6. Procédé de vidage d'un contenant de produit en vrac (10) à l'aide d'un système selon l'une quelconque des revendications précédentes, dans lequel le jeu mécanique de l'écluse à roue cellulaire (40), la pression de refoulement du système de refoulement par pression et la vitesse de rotation de la roue cellulaire de l'écluse à roue cellulaire (40) sont adaptées les unes aux autres en fonction de l'aptitude à l'écoulement du produit en vrac à décharger, de telle manière que, lorsque le système fonctionne, un débit d'air rentré accidentellement défini soit maintenu à travers l'écluse à roue cellulaire (40), lequel suffit à fluidiser le produit en vrac en suspens devant l'écluse à roue cellulaire (40) dans la direction de décharge du produit en vrac.

7. Procédé selon la revendication 6, **caractérisé en ce que** le contenant de produit en vrac (10) est amené à basculer d'une position de transport sensiblement horizontale dans une position inclinée ou verticale définie, dans laquelle un axe central géométrique d'une trémie de décharge (14) du contenant de produit en vrac (10) est orienté sensiblement verticalement.

8. Procédé selon la revendication 6 ou 7, **caractérisé en ce que** le contenant de produit en vrac (10), en fonction de l'aptitude à l'écoulement du produit en vrac, est amené à basculer en plusieurs étapes ou en une seule étape d'une position de transport sensiblement horizontale dans une position inclinée ou verticale définie.
